# EUROPÄISCHE PATENTSCHRIFT

(11) **EP 3 784 557 B1**
(45) Veröffentlichungstag und Bekanntmachung des Hinweises auf die Patenterteilung: **02.08.2023**
(21) Anmeldenummer: 19727826.0
(22) Anmeldetag: 24.04.2019
(51) Int. Cl.: B63B 21/56, B63B 35/66, G05D 1/02

(54) **VERFAHREN ZUM STEUERN EINES SCHLEPPVERBANDES**
METHOD FOR CONTROLLING A TOWING TRAIN
PROCÉDÉ DE PILOTAGE D'UN CONVOI REMORQUÉ

(30) Priorität: 25.04.2018 DE 102018109917
(43) Veröffentlichungstag der Anmeldung: 03.03.2021
(73) Patentinhaber: Schottel GmbH, 56322 Spay/Rhein (DE)
(72) Erfinder: JENSEN, Gerhard, 24321 Behrensdorf (DE)
(74) Vertreter: Wagner Albiger & Partner Patentanwälte mbB
(86) Internationale Anmeldenummer: PCT/EP2019/060514
(87) Internationale Veröffentlichungsnummer: WO 2019/206996

(56) Entgegenhaltungen:
- WO-A1-2017/167888
- WO-A1-2018/004353
- GB-A- 1 348 652
- KR-A- 20110 059 206

## Beschreibung

Die Erfindung betrifft ein Verfahren zum Steuern eines Schleppverbandes aus einem Schiff und mindestens einem an dem Schiff angreifenden Schleppschiff.

Derartige Schleppverbände sind beispielsweise in der Seeschifffahrt üblich, um aufgrund ihrer Größe nur bedingt manövrierfähige Schiffe in einem Hafen an ihren vorgesehenen Liegeplatz oder von diesem wieder aus dem Hafen heraus zu bringen, ferner um manövrierunfähige Schiffe zu bergen und/oder in einen Hafen zu bringen.

Die dabei eingesetzten Schleppschiffe sind üblicherweise hoch manövrierfähige Schiffe mit leistungsstarker Antriebsanlage, die zum Ziehen, Schieben und Bremsen der zumeist deutlich größeren Schiffe verwendet werden. Die Kraftübertragung auf das Schiff erfolgt durch das Ziehen an Schleppleinen, den sogenannten Trossen oder durch direktes Drücken mit dem Bug oder Heck auf den Schiffsrumpf.

Je nach Einsatzgebiet bewirken die Schleppschiffe eines Schleppverbandes eine Assistenz bei An- und Ablegemanövern großer Schiffe (Assistance), eine Assistenz von Schiffen bei Durchfahrten enger Passagen, wie Hafeneinfahrten und Kanälen (Escort) oder die Bergung von havarierten Schiffen (Salvage).

Entsprechend dieser Einsatzgebiete werden an die eingesetzten Schleppschiffe hohe Anforderungen in Bezug auf die Manövrierfähigkeit, Schuberzeugung und Erzeugung großer Steuer- und Bremskräfte gestellt. Im Allgemeinen werden zur Propulsion der Schleppschiffe azimuthierende Anlagen eingesetzt, die in der Lage sind, den erzeugten Schub um 360° gegenüber der Hochachse in jede gewünschte Richtung zu leiten. Derartige Schleppschiffe sind entweder mit Voith-Schneider Vertikalachsenrotoren (VSP) oder Azimut-Ruderpropellern als Festpropeller (FPP) oder Verstellpropeller (CPP) mit Düsen ausgestattet. Häufig gebrauchte Schleppertypen sind Tractor-Tugs und ASD-Schlepper (Azimut Stern Drive). Bei Tractor-Tugs sind die Propulsionsanlagen (meistens zwei Anlagen) im vorderen Bereich und bei ASD-Schleppern im Heck des Schiffes eingebaut. Das Unterscheidungsmerkmal ist hier die Installation und Position der Propulsatoren am Bug bzw. im Heck. Weitere bekannte Schleppertypen sind Rotorschlepper mit zwei Antriebsanlagen unter dem Vorschiff und einer weiteren im Heck, GIANO-Schlepper mit je einer Anlage am Bug und im Heck etc.

Auch unterscheiden sich die verschiedenen Typen von Schleppschiffen maßgeblich in den Rumpfformen und der Form der Skegs, die zur Stabilisierung und zur Vergrößerung der Unterwasserlateralfläche dienen, um größere Querwiderstandskräfte zu erzeugen, die neben dem erzeugten Schub wesentlichen Anteil der im Schleppverband auf das Schiff ausgeübten Kräfte haben.

Je nach erforderlichem Manöver für das zu bewegende Schiff kann ein einzelnes Schleppschiff verschiedene Positionen und Orientierungen zu diesem einnehmen, um eine gewünschte Kraft auszuüben. Im Verband mehrerer Schleppschiffe addieren sich die ausgeübten Kräfte und Momente zu einer resultierenden Gesamtkraft und einem resultierenden Gesamtmoment.

Eingegrenzt werden die möglichen Positionen der Schleppschiffe über die Position der Anbindung der einzelnen Schleppleinen am Schiff, deren Länge, Angriffspunkte am Schiffsrumpf und die Vermeidung gefährlicher Betriebszustände. Die Bestimmung der besten Position und Orientierung des Schleppschiffes, um die größtmögliche Wirkung zu erzielen, obliegt bislang der Erfahrung des Kapitäns des Schleppschiffes. Sind mehrere Schleppschiffe an der Manövrieraufgabe beteiligt, bedarf es überdies einer Koordination der einzelnen Schleppschiffe untereinander, üblicherweise durch Absprache zwischen den einzelnen Kapitänen der Schleppschiffe und/oder nach Anweisung eines auf dem Schiff befindlichen Lotsen. Hierfür ist ein großes Maß an Erfahrung erforderlich.

Es ist bekannt, die Escort-Fähigkeit und Kraftwirkung von Schleppschiffen mittels Berechnungsprogrammen zu bestimmen, etwa um das Design des Schleppschiffes zu überprüfen oder den Nachweis einer ausreichenden Krafterzeugung zu führen, die in Form einer sogenannten Escort-Notation ausgedrückt wird.

Je nach Bauform und Größe des jeweiligen Schleppschiffes wird das Zusammenspiel der sich einstellenden Kräfte und Momente durch unterschiedliche Parameter beeinflusst, beispielsweise die Schuberzeugung der Propulsionsanlagen durch Variation der Leistung, die Richtung des Zuges durch den Steuerwinkel der einzelnen Anlagen und deren Positionierung sowie Strömungskräfte durch Ausrichtung des Schleppschiffes zur Fahrtrichtung und Geschwindigkeit des Schiffes.

Diese unterschiedlichen Parameter verhindern bislang die Übernahme von in Modellversuchen ermittelten Daten eines spezifischen Schleppschiffes in ein Assistenzsystem, welches die Positionierung und den Antrieb der einzelnen Schleppschiffe eines Schleppverbandes unabhängig von dessen Bauform und der Größe des Schleppverbandes durchführt oder unterstützt, um die einzelnen Schleppschiffe möglichst optimal, d. h. mit geringstmöglichem Schubeinsatz zur Effizienzsteigerung einzusetzen.

Die WO 2017/167888 A1 offenbart den Einsatz ferngesteuerter Schleppschiffe, die autonom ein zu assistierendes Schiff anfahren und die Schleppleine übergeben und anschließend von einem Lotsen auf dem zu assistierenden Schiff mittels einer Fernbedienung gesteuert werden können, bis der Schleppauftrag abgeschlossen ist und sich die Schleppschiffe wieder autonom in den Hafen zurückbewegen. Die korrekte Ausführung des Schleppauftrages hängt von der Erfahrung des die einzelnen Schleppschiffe fernsteuernden Lotsen ab und erfolgt nicht selbsttätig.

Die KR 20110059206A beschreibt eine automatische Steuerung mehrerer Schleppschiffe, um ein zu assistierendes Schiff auf den letzten Metern an seinen vorgesehenen Liegeplatz an einer Kaimauer zu manövrieren. Dabei wird die Kaimauer als feststehende Referenzlinie für die Erzeugung von Steuerbefehlen benötigt. Eine Steuerung eines Schleppverbandes entfernt von der Kaimauer, beispielsweise vor und während einer Hafeneinfahrt ist mit diesem System nicht möglich.

Aus der WO 2018/004353 A1 ist ferner eine dynamische Steuerung für die auf den Schleppschiffen vorgesehenen Winden der Schleppleinen bekannt, die ein Schleppschiff in einen für die Nutzung der Winde geeigneten Arbeitsbereich positioniert. Die Auswahl der optimalen Positionierung der einzelnen Schleppschiffe eines Schleppverbandes ist mit der bekannten Steuerung jedoch nicht möglich.

Aufgabe der vorliegenden Erfindung ist es, ein Verfahren zum Steuern eines Schleppverbandes aus einem Schiff und mindestens einem an dem Schiff angreifenden Schleppschiff vorzuschlagen, welches als automatisiertes Assistenzsystem selbsttätig die effizienteste Position und Antriebskonfiguration der einzelnen Schleppschiffe für einen konkreten Schleppauftrag ermittelt und an die beteiligten Schleppschiffe übermittelt, damit diese sodann vom jeweiligen Kapitän entsprechend positioniert und konfiguriert bzw. automatisiert in die berechneten Positionen und Antriebskonfigurationen eingestellt werden.

Zur Lösung der gestellten Aufgabe wird erfindungsgemäß die Ausgestaltung eines Verfahrens gemäß den Merkmalen des Patentanspruchs 1 vorgeschlagen.

Vorteilhafte Ausgestaltungen und Weiterbildungen des erfindungsgemäßen Verfahrens sind Gegenstand der abhängigen Ansprüche.

Die Erfindung schlägt vor, zum Steuern des Schleppverbandes aus einem Schiff und mindestens einem an dem Schiff angreifenden Schleppschiff beispielsweise automatisiert in einer entsprechenden Datenverarbeitungsanlage die folgende Schrittabfolge durchzuführen:
a) Bereitstellung eines Datenmodells, welches fixe Daten des Schiffes und des mindestens einen Schleppschiffes sowie variable Umgebungsdaten umfasst;
b) Ermitteln des aktuellen Kurses, des Schubvektors und der Trägheitskraft des Schiffes und Vorgabe einer gewünschten Fahrtrichtung des Schiffes mit anschließender Berechnung des erforderlichen Korrekturkraftvektors und des Korrekturdrehmoments zum Erreichen der gewünschten Fahrtrichtung;
c) Berechnung der erforderlichen Positionen, Orientierungen und Antriebsstellungen des mindestens einen angreifenden Schleppschiffes mit einem auf das Datenmodell zugreifenden Algorithmus und Erzeugung von Steuerbefehlen für das mindestens eine Schleppschiff, dergestalt, dass die Summe aller Kraftvektoren und Drehmomente des mindestens einen bzw. der angreifenden Schleppschiffe(s) dem erforderlichen Korrekturkraftvektor und Korrekturdrehmoment entsprechen;
d) Übermittlung der erzeugten Steuerbefehle an das mindestens eine angreifende Schleppschiff und Überwachen des Abschlusses der Steuerbefehle;
e) Durchführung einer Evaluierung des erzeugten Korrekturkraftvektors und des Korrekturdrehmoments nach dem Abschluss der Steuerbefehle und Erzeugen und Ablegen von Korrekturwerten im Datenmodell bei Ermittlung von Abweichungen des erzeugten Korrekturkraftvektors vom erforderlichen Korrekturkraftvektor und/oder des erzeugten Korrekturdrehmoments vom erforderlichen Korrekturdrehmoment und anschließende erneute Ausführung der Schritte c) bis e).

Erfindungsgemäß wird somit ein selbstlernendes und sich stetig optimierendes Assistenzsystem geschaffen, welches die optimale Position und Orientierung der einzelnen Schleppschiffe zum Schiff bestimmt und in Steuerbefehle für die einzelnen Propulsionsanlagen umsetzt, um die gewünschte Kraft auf das zu assistierende Schiff auszuüben. Hierbei wird das Assistenzsystem durch fortwährende Optimierung des Datenmodells beim Abfahren des Manövers fortlaufend trainiert und optimiert.

Die anfänglich hinterlegten Daten des bereitgestellten Datenmodells, auf welche der Algorithmus zur Berechnung der erforderlichen Positionen, Orientierungen und Antriebsstellungen des mindestens einen angreifenden Schleppschiffes zurückgreift, können über das initiale Abfahren von vorgegebenen Manövern erzeugt und bereitgestellt werden.

Um den Korrekturaufwand und die Optimierungsroutine effizient zu gestalten, wird nach einem Vorschlag der Erfindung vorgeschlagen, dass Grenzwerte vorgegeben werden und im Schritt e) das Erzeugen und Ablegen von Korrekturwerten im Datenmodell bei Ermittlung von den Grenzwert übersteigenden Abweichungen des erzeugten Korrekturkraftvektors vom erforderlichen Korrekturkraftvektor und/oder des erzeugten Korrekturdrehmoments vom erforderlichen Korrekturdrehmoment durchgeführt wird und bei Unterschreiten der Grenzwerte keine Korrekturwerte erzeugt und abgelegt werden. Die Grenzwerte können in das System eingegeben oder aus einer Datenbank ausgelesen werden und dienen somit als Abbruchkriterium für die fortlaufende Optimierung des selbstlernenden Systems.

Die im Datenmodell erfassten fixen Daten können mindestens ein Element der die Hüllenform, die Hauptabmessungen, die relative Höhe einer Schleppleinenanbindung, die Ausprägung des Skegs, die Position der Propulsionsanlagen, die Art und Leistung der Propulsionsanlagen des Schiffes und/oder des mindestens einen Schleppschiffes umfassenden Gruppe enthalten.

Die im Datenmodell erfassten variablen Umgebungsdaten können mindestens ein Element der die Länge der Schleppleine und deren Lage im Raum, die aktuelle Fahrgeschwindigkeit und Fahrtrichtung, die Wassertiefe, Wind-und oder Seegangslasten des Schiffes und oder des mindestens einen Schleppschiffes umfassenden Gruppe enthalten.

Während die fixen Daten vorab bekannt und manuell eingegeben bzw. automatisiert aus einer entsprechenden Datenbank eingelesen werden können, werden die variablen Umgebungsdaten vorzugsweise von geeigneten Sensoren an Bord des Schiffes und/oder des mindestens einen bzw. der angreifenden Schleppschiffe ermittelt und in vorgegebenen Zeitintervallen oder fortlaufend im Datenmodell hinterlegt.

Im Rahmen des erfindungsgemäßen Verfahrens müssen nicht sämtliche vorgenannten fixen bzw. variablen Daten vorhanden sein und verarbeitet werden, allerdings wird durch Berücksichtigung einer möglichst großen Datenmenge die Genauigkeit des erfindungsgemäßen Verfahrens erhöht und die benötigte Trainingsdauer bis zum Erreichen optimaler Lösungen bedeutend verkürzt.

Das erfindungsgemäße Verfahren wird zu Beginn des Zugriffs auf das Datenmodell aus den Einflussgrößen bereits die notwendigen Steuerkräfte der einzelnen Schleppschiffe in Betrag und Richtung der eingesetzten Propulsionsanlagen berechnen, jedoch noch nicht unmittelbar zu den gewünschten bzw. optimalen Ergebnissen gelangen können, da das Datenmodell die Schiffsform, seine Konfiguration und die sich daraus ergebenden Eigenschaften des Schiffes nicht kennt. Durch ein festgelegtes Muster einer festgelegten Anzahl von Manövern werden die an der Schleppleine aufgebrachten Kräfte bestimmt und in einem das erfindungsgemäße Verfahren ausführenden Rechner einer Datenverarbeitungsanlage abgelegt und verarbeitet. Dieser Vorgang kann beispielsweise an einem zu eskortierenden Schiff oder einem weiteren Schleppschiff während der ersten Probefahrten durchgeführt werden. Nach und nach adaptiert jedoch der Algorithmus das Datenmodell an die spezifischen Gegebenheiten des einzelnen Schleppschiffes und ermittelt stetig bessere Lösungen während des Betriebs.

Die nach dem erfindungsgemäßen Verfahren erzeugten Steuerbefehle können den Winkel zwischen Schiff und Schleppschiff, den Winkel zwischen Schiff und Schleppleine, dass Heading des Schleppschiffes, den Ruderwinkel und/oder Schub der Propulsionsanlagen des Schleppschiffes umfassen. Unter dem Ruderwinkel wird hierbei erfindungsgemäß je nach Bauform der Propulsionsanlagen sowohl eine konkrete Winkelstellung einer Ruderanlage als auch die Winkelstellung eines um die Hochachse schwenkbaren Ruderpropellers oder in seiner Schubrichtung steuerbaren Voith-Schneider Propellers verstanden.

Die erzeugten und anschließend an das mindestens eine Schleppschiff übermittelten Steuerbefehle können entweder auf dem jeweiligen Schleppschiff lediglich angezeigt werden, um als Hilfestellung für den Kapitän zu dienen, der das Schleppschiff nach wie vor selbst steuert oder aber auf dem jeweiligen Schleppschiff als Vorgabewerte in ein dynamisches Positioniersystem des Schleppschiffes eingelesen werden, sodass das Schleppschiff die Steuerbefehle vollautomatisch umsetzt. In diesem Fall braucht der Kapitän des Schleppschiffes den Vorgang lediglich noch zu überwachen oder aber das Schleppschiff wird gänzlich unbemannt betrieben.

Nach einem weiteren Vorschlag der Erfindung können die variablen Daten zusätzlich Beschränkungen des umgebenden Gewässers aus einer elektronischen Seekarte, beispielsweise Beschränkungen der Wassertiefe, Breite des Fahrweges, Sperrungen, Geschwindigkeitsbeschränkungen sowie auch Verkehrsverhältnisse des umgebenden Schiffsverkehrs umfassen, die vom Algorithmus bei der Erzeugung der Steuerbefehle berücksichtigt werden.

Ferner kann das Datenmodell zusätzlich Daten der zulässigen Betriebsbedingungen des mindestens einen Schleppschiffes umfassen, sodass gefährliche Betriebsbedingungen für die einzelnen Schleppschiffe automatisch vermieden werden, beispielsweise die sich unter Schub, den Seilkräften und äußeren Umgebungslasten einstellende Krängung der Schleppschiffe, die beim Überschreiten vorgegebener Grenzen zu einem Kentern des Schleppschiffes führen kann. Aufgrund der selbstlernenden Eigenschaften des erfindungsgemäßen Verfahrens wird unter Ausnutzung der zulässigen Bereiche der einzelnen Schleppschiffe das jeweilige Manöver des Schleppverbandes bestmöglich durchgeführt.

Durch die fortlaufende Aktualisierung des Datenmodells auch hinsichtlich der berücksichtigten variablen Umgebungsdaten können auch Störungsfälle automatisch ausgeregelt werden, beispielsweise bei Riss einer Schleppleine an einem Schleppschiff die Bereitstellung des erforderlichen Korrekturkraftvektors durch Neupositionierung der verbleibenden Schleppschiffe.

Das erfindungsgemäße Verfahren wird in weiteren Einzelheiten nachfolgend anhand der schematischen Zeichnung erläutert. Es zeigen:
- Figur 1: schematisch die wirkenden Kräfte und Faktoren einer typischen Anordnung eines Schleppschiffes im Escortbetrieb hinter einem zu assistierenden Schiff;
- Figur 2: die sich unter Anwendung des erfindungsgemäßen Verfahrens einstellenden Kräfte und Momente in einem Schleppverband.

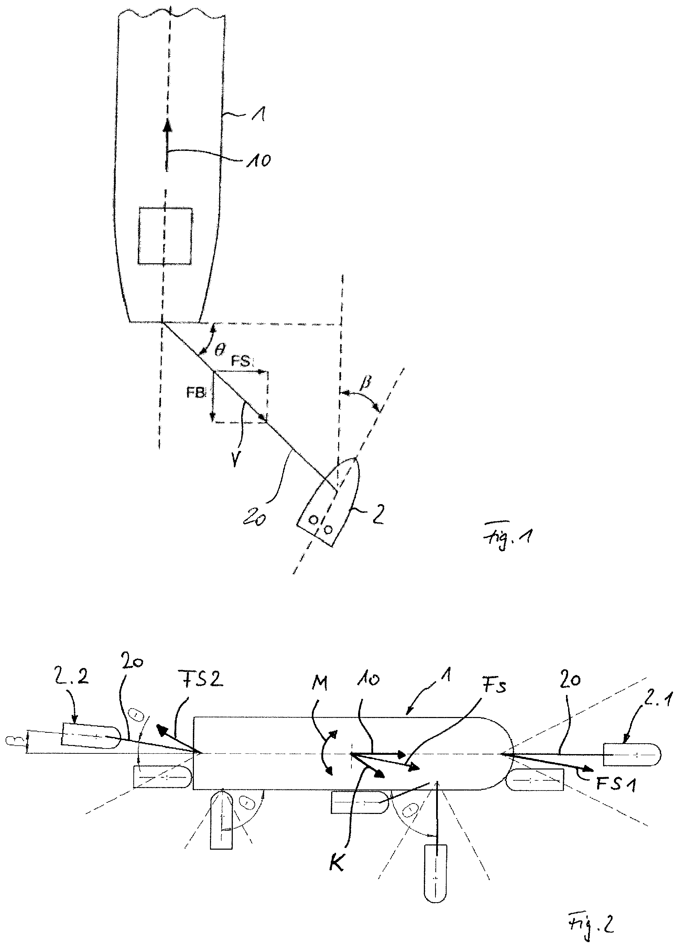

Die Figur 1 zeigt die typische Anordnung eines Schleppschiffes 2 im Escortbetrieb eines Schleppverbandes hinter einem zu assistierenden Schiff 1, welches durch eigenen Vortrieb oder durch ein vorausfahrendes weiteres, hier nicht dargestelltes Schleppschiff einen Vortriebsvektor 10 erzeugt. Das Schleppschiff 2 ist am Heck des Schiffes 1 über eine Schleppleine 20 mit dem Schiff 1 verbunden und hat die Aufgabe, Bremskräfte FB sowie Steuerkräfte FS zu erzeugen. Die Kraft V in der Schleppleine 20 ist die resultierende aus sämtlichen am Schleppschiff 2 wirkenden Kräften aus der Propulsion, den Strömungskräften an der Schiffshülle des Schiffes 1 sowie des Schleppschiffes 2 sowie etwaigen Wind- und Seegangslasten. Der Winkel zwischen dem Schiff 1 und der Schleppleine 20 ist mit θ gekennzeichnet, der Winkel zwischen der Längsachse des Schleppschiffes 2 und dem Schiff 1 ist mit β gekennzeichnet.

Die Figur 2 zeigt in der schematischen Aufsicht einen Schleppverband aus dem Schiff 1 und einem vorausfahrenden und über eine Schleppleine 20 mit dem Bug des Schiffes 1 verbundenen ersten Schleppschiff 2.1 sowie einem über eine weitere Schleppleine 20 mit dem Heck des Schiffes 1 verbundenen zweiten Schleppschiff 2.2. Darüber hinaus sind mögliche weitere Positionen der Schleppschiffe oder weiterer Schleppschiffe in Bezug auf das Schiff 1 dargestellt.

In einer beispielsweise an Bord eines der Schleppschiffe 2.1, 2.2 oder an einem entfernt, zum Beispiel an Land positionierten Leitstand installierten Datenverarbeitungsanlage ist in einem entsprechenden Speicher ein Datenmodell abgelegt, welches fixe Daten des Schiffes 1 und der Schleppschiffe 2.1, 2.2 enthält. Hierbei kann es sich um Daten der Hüllenform, der Hauptabmessungen, wie Länge, Breite, Tiefgang, Trimm und hydrostatische Daten des Schiffes 1 und der Schleppschiffe 2.1, 2.2 handeln, die jeweils an Bord vorhanden sind und entsprechend manuell oder automatisch hinterlegt werden oder zum jeweiligen aktuellen Tiefgang interpretierbar sind. Ferner umfassen die fixen Daten die relative Höhe der Schleppleinenanbindung der einzelnen Schleppleine 20, die Ausprägung des Skegs, die Position und Art der Propulsionsanlagen und deren Leistungsdaten sowohl von Schiff 1 als auch der beteiligten Schleppschiffe 2.1, 2.2.

Darüber hinaus umfasst das Datenmodell auch variable Umgebungsdaten, wie die Länge und Raumposition der Schleppleine 20, die entweder manuell eingegeben oder durch entsprechende Sensoren automatisch erfasst werden, die Geschwindigkeit und Richtung des Schiffes 1 und der Schleppschiffe 2.1, 2.2, welche aus dem jeweiligen Electronic Chart Display and Information System (ECDIS) ausgelesen werden, die Wassertiefe, welche ebenfalls aus ECDIS oder bordeigenen Sensoren ermittelt wird sowie Umgebungsbedingungen, wie Wind- und Seegangslasten, die durch bordeigene Sensoren ermittelt werden.

Für einen gewünschten Manövrierauftrag soll das Schiff 1 in einer gewünschten Fahrtrichtung FS von den Schleppschiffen 2.1, 2.2 bewegt werden, wozu es erforderlich ist, nach Maßgabe der aus Figur 1 erläuterten Zusammenhänge die Schleppschiffe 2.1, 2.2 mit den zugehörigen Schleppleinen 20 an eine bestimmte optimale Position zu verfahren und mit einer optimalen Einstellung der Propulsionsanlagen hinsichtlich erzeugtem Schub und Richtung zu betreiben. Dabei erzeugt das Schleppschiff 2.1 den Kraftvektor FS1 und das Schleppschiff 2.2 den Kraftvektor FS2, die sich im Idealfall zu einem resultierenden Korrekturkraftvektor K und einem entsprechenden Korrekturdrehmoment addieren, welche exakt die gewünschte Fahrtrichtung FS des Schiffes hervorrufen. Die Schwierigkeit besteht darin, die Schleppschiffe 2.1, 2.2 so zu positionieren, dass die exakt erforderlichen Kraftvektoren FS1, FS2 erzeugt werden, was genaue Kenntnis der Bedingungen sowie eine große Erfahrung der beteiligten Schiffsführer voraussetzt.

Im Rahmen eines automatisierten Assistenzsystems gemäß der vorliegenden Erfindung wird von der Datenverarbeitungsanlage in Rückkopplung mit dem Schubvektor bzw. der Trägheitskraft in Richtung des Schiffes und dessen Kurs der resultierende Korrekturkraftvektor K und das Korrekturdrehmoment ermittelt, welches zum Erreichen der vorgegebenen gewünschten Fahrtrichtung FS des Schiffes erforderlich ist.

Ein auf der Datenverarbeitungsanlage ablaufender Algorithmus gleicht den ermittelten Korrekturkraftvektor K und das Korrekturdrehmoment mit den aus der Figur 2 ersichtlichen möglichen Positionen und Orientierungen der beteiligten Schleppschiffe 2.1,2.2 ab und berechnet die erforderlichen Positionen, Orientierungen und Antriebsstellungen der angreifenden Schleppschiffe 2.1, 2.2 unter Rückgriff auf die im Datenmodell hinterlegten Daten und erzeugt entsprechende Steuerbefehle für die Schleppschiffe 2.1,2.2, die den Winkel θ zwischen Schiff 1 und Schleppleine 20, den Winkel β zwischen dem Schiff 1 und dem Schleppschiff 2.1 bzw. 2.2, das Heading des Schleppschiffes 2.1, 2.2, den Anlagen-/Ruderwinkel sowie die Leistung bzw. Drehzahl und Schub des einzelnen Schleppschiffes 2.1, 2.2 umfassen.

Diese erzeugten Steuerbefehle werden an die angreifenden Schleppschiffe 2.1, 2.2 übermittelt und entweder auf der jeweiligen Schiffsbrücke lediglich zur Anzeige gebracht, um den Kapitän bei der Umsetzung des erforderlichen Manövers zu unterstützen oder unmittelbar in Stellbefehle für ein dynamisches Positioniersystem der Schleppschiffe 2.1, 2.2 umgewandelt, sodass die Schleppschiffe 2.1, 2.2 die Steuerbefehle automatisiert anfahren. Das Erreichen der berechneten Steuerbefehle wird überwacht und ebenfalls an die Datenverarbeitungsanlage rückgemeldet.

Sobald die berechneten Steuerbefehle der Schleppschiffe 2.1, 2.2 erreicht bzw. ausgeführt sind, wird eine Evaluierung des tatsächlich erzeugten Korrekturkraftvektors bzw. Korrekturdrehmoments durchgeführt und bei entsprechend ermittelten Abweichungen vom erforderlichen Korrekturkraftvektor K und/oder des erforderlichen Korrekturdrehmoments werden entsprechende Korrekturwerte im Datenmodell hinterlegt, sodass anschließend die erneute Berechnung der Steuerbefehle und Übermittlung an die Schleppschiffe 2.1, 2.2 mit anschließender Evaluierung durchgeführt werden kann, sodass das Datenmodell fortlaufend optimiert wird.

Im Ergebnis wird nach dem Prinzip des "Machine Learning" ein sich stetig optimierendes Datenmodell des Schleppverbandes erhalten, welches in kurzer Zeit als Assistenzvorgabe die beste Position, Orientierung und Leistungsabgabe der Schleppschiffe 2.1, 2.2 zur Erzielung der größtmöglichen Wirkung bei optimaler Effizienz ermittelt oder selbsttätig einstellt.

Dabei können örtliche Gegebenheiten der Fahrrinne, die vorherrschenden Verkehrsverhältnisse sowie gefährliche Betriebsbedingungen berücksichtigt werden und Störungsfälle automatisch ausgeregelt werden.

Die vom System vorgegebene Seilkraft kann statisch aufrechterhalten werden oder auch durch dynamisches Fahren zeitweise erhöht werden.

Es versteht sich, dass anstelle des erläuterten Ausführungsbeispiels mit zwei Schleppschiffen 2.1, 2.2 auch Schleppverbände mit lediglich einem Schleppschiff oder mehr als zwei derartigen Schleppschiffen berechnet und gesteuert werden können.

In jedem Fall werden die beteiligten Schleppschiffe im jeweiligen Schleppmanöver optimal effizient eingesetzt, sodass sich die Dauer des Schleppmanövers sowie der hierfür aufzuwendende Treibstoffverbrauch minimiert.

Zusammenfassend bildet das erfindungsgemäße Verfahren die Basis eines Assistenzsystems für die Positionierung und Steuerung von Schleppschiffen, wobei die Datenbasis zur Beschreibung der individuellen Fähigkeit des Schleppschiffes durch einen stetigen Lernprozess erzeugt und kontinuierlich verbessert wird und die Bestimmung der optimalen Position für die Assistenz eines Schiffes, vorzugsweise im Escortbetrieb, aber auch bei anderen möglichen Schlepperpositionen durchgeführt werden kann. Ein automatisches Anfahren der Position der Schleppschiffe und Ausrichten der Orientierung des Schiffes ist ebenso möglich wie automatisches Halten der Positionen und automatisches Regeln der erzeugten Zug- und Druckkräfte auf das Schiff. Unzulässige Betriebsbereiche, wie Richtungen des Schubstrahls zur Vermeidung schädlicher Interaktionen zwischen Schubstrahl und Schiff sowie Beschränkungen innerhalb der Fahrrinne und gefährliche Betriebszustände, aus denen beispielsweise ein Kentern eines Schleppschiffes drohen kann, werden zuverlässig vermieden. Neben der Anwendung als Einzelsystem für ein einzelnes Schleppschiff kann auch die Koordination mehrerer Schleppschiffe im Schleppverband erfolgen, darüber hinaus ist es auch möglich, in einer erweiterten Ausbaustufe der zugrundeliegenden Software entsprechende Assistenz-Manöver zu simulieren.

## Patentansprüche

1. Verfahren zum Steuern eines Schleppverbandes aus einem Schiff (1) und mindestens einem an dem Schiff (1) angreifenden Schleppschiff (2, 2.1, 2.2), umfassend die Schritte:
a) Bereitstellung eines Datenmodells, welches fixe Daten des Schiffes (1) und des mindestens einen Schleppschiffes (2, 2.1, 2.2) sowie variable Umgebungsdaten umfasst;
b) Ermitteln des aktuellen Kurses, des Schubvektors (10) und der Trägheitskraft des Schiffes (1) und Vorgabe einer gewünschten Fahrtrichtung (Fs) des Schiffes (1) mit anschließender Berechnung des erforderlichen Korrekturkraftvektors (K) und des Korrekturdrehmoments (M) zum Erreichen der gewünschten Fahrtrichtung (Fs);
c) Berechnung der erforderlichen Positionen, Orientierungen und Antriebsstellungen des mindestens einen angreifenden Schleppschiffes (2, 2.1, 2.2) mit einem auf das Datenmodell zugreifenden Algorithmus und Erzeugung von Steuerbefehlen für das mindestens eine Schleppschiff (2, 2.1, 2.2), dergestalt, dass die Summe aller Kraftvektoren (Fs1, Fs2) und Drehmomente des mindestens einen angreifenden Schleppschiffes (2, 2.1, 2.2) dem erforderlichen Korrekturkraftvektor (K) und Korrekturdrehmoment (M) entsprechen;
d) Übermittlung der erzeugten Steuerbefehle an das mindestens eine angreifende Schleppschiff (2, 2.1, 2.2) und Überwachen des Abschlusses der Steuerbefehle;
e) Durchführung einer Evaluierung des erzeugten Korrekturkraftvektors und des Korrekturdrehmoments nach dem Abschluss der Steuerbefehle und Erzeugen und Ablegen von Korrekturwerten im Datenmodell bei Ermittlung von Abweichungen des erzeugten Korrekturkraftvektors (K') vom erforderlichen Korrekturkraftvektor (K) und/oder des erzeugten Korrekturdrehmoments (M') vom erforderlichen Korrekturdrehmoment (M) und anschließende erneute Ausführung der Schritte c) bis e).

2. Verfahren nach Anspruch 1, **dadurch gekennzeichnet, dass** Grenzwerte vorgegeben werden und im Schritt e) das Erzeugen und Ablegen von Korrekturwerten im Datenmodell bei Ermittlung von den Grenzwert übersteigenden Abweichungen des erzeugten Korrekturkraftvektors (K') vom erforderlichen Korrekturkraftvektor (K) und/oder des erzeugten Korrekturdrehmoments (M') vom erforderlichen Korrekturdrehmoment (M) durchgeführt wird und bei Unterschreiten der Grenzwerte keine Korrekturwerte erzeugt und abgelegt werden.

3. Verfahren nach Anspruch 1 oder 2, **dadurch gekennzeichnet, dass** die im Datenmodell erfassten fixen Daten mindestens eines der Hüllenform, der Hauptabmessungen, der relativen Höhe einer Schleppleinenanbindung, der Ausprägung des Skegs, der Position der Propulsionsanlagen, der Art der Propulsionsanlagen und der Leistungsdaten der Propulsionsanlagen des Schiffes (1) und/oder des mindestens einen Schleppschiffes (2, 2.1, 2.2) umfassen.

4. Verfahren nach einem der Ansprüche 1 bis 3, **dadurch gekennzeichnet, dass** die im Datenmodell erfassten variablen Umgebungsdaten mindestens eines der Länge der Schleppleine (20) und der Lage im Raum, der aktuellen Fahrgeschwindigkeit und Fahrtrichtung, der Wassertiefe, Wind- und/oder Seegangslasten des Schiffes (1) und/oder des mindestens einen Schleppschiffes (2, 2.1, 2.2) umfassen.

5. Verfahren nach einem der Ansprüche 1 bis 4, **dadurch gekennzeichnet, dass** die Steuerbefehle den Winkel (β) zwischen Schiff (1) und dem mindestens einen Schleppschiff (2, 2.1, 2.2), den Winkel (σ) zwischen Schiff (1) und Schleppleine (20), Heading des mindestens einen Schleppschiffes (2, 2.1, 2.2), Ruderwinkel und/oder Schub der Propulsionsanlagen des mindestens einen Schleppschiffes (2, 2.1, 2.2) umfassen.

6. Verfahren nach einem der Ansprüche 1 bis 5, **dadurch gekennzeichnet, dass** die übermittelten Steuerbefehle auf dem mindestens einen Schleppschiff (2, 2.1, 2.2) angezeigt und/oder als Vorgabewerte in ein dynamisches Positioniersystem des mindestens einen Schleppschiffes (2, 2.1, 2.2) eingelesen werden.

7. Verfahren nach einem der Ansprüche 1 bis 6, **dadurch gekennzeichnet, dass** die variablen Daten zusätzlich Beschränkungen des umgebenden Gewässers aus einer elektronischen Seekarte sowie umgebenden Schiffsverkehr umfassen und vom Algorithmus bei der Erzeugung der Steuerbefehle berücksichtigt werden.

8. Verfahren nach einem der Ansprüche 1 bis 7, **dadurch gekennzeichnet, dass** das Datenmodell zusätzlich Daten der zulässigen Betriebsbedingungen des mindestens einen Schleppschiffes (2, 2.1, 2.2) umfasst.

## Claims

1. Method for controlling a towing train consisting of a ship (1) and at least one tug (2, 2.1, 2.2) acting on the ship (1), comprising the steps of:
a) providing a data model which comprises fixed data relating to the ship (1) and relating to the at least one tug (2, 2.1, 2.2) and variable environmental data;
b) determining the current course, the thrust vector (10) and the inertial force of the ship (1) and specifying a desired travel direction (Fs) of the ship (1) with a subsequent calculation of the correction force vector (K) and the correction torque (M) required to achieve the desired travel direction (Fs);
c) calculating the required positions, orientations, and drive settings of the at least one acting tug (2, 2.1, 2.2) using an algorithm that accesses the data model and generating control commands for the at least one tug (2, 2.1, 2.2) such that the sum of all the force vectors (Fs1, Fs2) and torques of the at least one acting tug (2, 2.1, 2.2) corresponds to the required correction force vector (K) and correction torque (M);
d) transmitting the generated control commands to the at least one acting tug (2, 2.1, 2.2) and monitoring the completion of the control commands;
e) conducting an evaluation of the produced correction force vector and correction torque after completion of the control commands and producing and storing correction values in the data model when deviations are detected between the produced correction force vector (K') and the required correction force vector (K) and/or between the produced correction torque (M') and the required correction torque (M), and then repeating steps c) to e).

2. Method according to claim 1, **characterised in that** limit values are specified and in step e), the producing and storing of correction values in the data model are carried out upon detection of deviations of the produced correction force vector (K') from the required correction force vector (K) and/or deviations of the produced correction torque (M') from the required correction torque (M) that exceed the limit value and when the limit values are not met, no correction values are produced and stored.

3. Method according to claim 1 or 2, **characterised in that** the fixed data recorded in the data model comprise at least one of the following: the hull shape, main dimensions, relative height of a tow line connection, characteristics of the skeg, position of the propulsion systems, type of propulsion systems, and performance data of the propulsion systems of the ship (1) and/or the at least one tug (2, 2.1, 2.2).

4. Method according to any one of claims 1 to 3, **characterised in that** the variable environmental data recorded in the data model comprise at least one of the following: the length of the tow line (20) and the spatial position, the current travel speed and travel direction, the water depth, the wind and/or wave load of the ship (1) and/or the at least one tug (2, 2.1, 2.2).

5. Method according to any one of claims 1 to 4, **characterised in that** the control commands comprise the angle (β) between the ship (1) and the at least one tug (2, 2.1, 2.2), the angle (σ) between the ship (1) and tow line (20), heading of the at least one tug (2, 2.1, 2.2), rudder angle and/or thrust of the propulsion systems of the at least one tug (2, 2.1, 2.2).

6. Method according to any one of claims 1 to 5, **characterised in that** the transmitted control commands are displayed on the at least one tug (2, 2.1, 2.2) and/or are read as default values into a dynamic positioning system of the at least one tug (2, 2.1, 2.2).

7. Method according to any one of claims 1 to 6, **characterised in that** the variable data also comprise limitations of a surrounding body of water from an electronic nautical chart as well as surrounding shipping traffic and are taken into account by the algorithm in the generation of the control commands.

8. Method according to any one of claims 1 to 7, **characterised in that** the data model also comprises data about the permissible operating conditions of the at least one tug (2, 2.1, 2.2).

## Revendications

1. Procédé de commande d'un convoi remorqué composé d'un navire (1) et d'au moins un remorqueur (2, 2.1, 2.2) accroché au navire (1), comprenant les étapes consistant à :
a) fournir un modèle de données qui comporte des données fixes du navire (1) et d'au moins un remorqueur (2, 2.1, 2.2) ainsi que des données environnementales variables ;
b) déterminer la trajectoire actuelle, le vecteur de poussée (10) et la force d'inertie du navire (1) et indiquer un sens de circulation (Fs) souhaité du navire (1) avec le calcul suivant du vecteur de force de correction (K) et du couple de correction (M) nécessaires pour l'atteinte du sens de circulation (Fs) souhaité ;
c) calculer les positions, orientations et positions d'entraînement nécessaires d'au moins un remorqueur (2, 2.1, 2.2) accroché avec un algorithme accédant au modèle de données et générer des ordres de commande pour l'au moins un remorqueur (2, 2.1, 2.2) de telle manière que la somme de tous les vecteurs de force (Fs1, Fs2) et les couples d'au moins un remorqueur (2, 2.1, 2.2) accroché correspondent au vecteur de force de correction (K) et au couple de correction (M) nécessaires ;
d) transmettre les ordres de commande générés à l'au moins un remorqueur (2, 2.1, 2.2) accroché et surveiller l'exécution des ordres de commande ;
e) réaliser une évaluation du vecteur de force de correction généré et du couple de correction après l'exécution des ordres de commande et générer et stocker des valeurs de correction dans le modèle de données lors de la détermination de divergences entre le vecteur de force de correction (K') généré et le vecteur de force de correction (K) nécessaire et/ou entre le couple de correction (M') généré et le couple de correction (M) nécessaire et réaliser à nouveau ensuite les étapes c) à e).

2. Procédé selon la revendication 1, **caractérisé en ce que** des valeurs limites sont indiquées et dans l'étape e), la génération et le stockage de valeurs de correction dans le modèle de données sont réalisés lors de la détermination des divergences dépassant la valeur limite du vecteur de force de correction (K') généré par rapport au vecteur de force de correction (K) nécessaire et/ou des déviations du couple de correction (M') généré par rapport au couple de correction (M) nécessaire et aucune valeur de correction n'est générée et stockée lorsque les valeurs limites ne sont pas atteintes.

3. Procédé selon la revendication 1 ou 2, **caractérisé en ce que** les données fixes détectées dans le modèle de données comportent au moins un parmi la forme d'enveloppe, les dimensions principales, la hauteur relative d'une liaison de câble de remorquage, l'empreinte de la dérive, la position des installations de propulsion, le type des installations de propulsion et les données de puissance des installations de propulsion du navire (1) et/ou d'au moins un remorqueur (2, 2.1, 2.2).

4. Procédé selon l'une quelconque des revendications 1 à 3, **caractérisé en ce que** les données environnementales variables détectées dans le modèle de données comportent au moins un parmi la longueur des câbles de remorquage (20) et la position dans l'espace, la vitesse de circulation et le sens de circulation actuels, la profondeur de l'eau, les charges du vent et/ou de la houle du navire (1) et/ou d'au moins un remorqueur (2, 2.1, 2.2).

5. Procédé selon l'une quelconque des revendications 1 à 4, **caractérisé en ce que** les ordres de commande comportent l'angle (β) entre le navire (1) et l'au moins un remorqueur (2, 2.1, 2.2), l'angle (σ) entre le navire et les câbles de remorquage (20), le cap d'au moins un remorqueur (2, 2.1, 2.2), l'angle de gouvernail et/ou la poussée des installations de propulsion d'au moins un remorqueur (2, 2.1, 2.2).

6. Procédé selon l'une quelconque des revendications 1 à 5, **caractérisé en ce que** les ordres de commande transmis sont affichés sur l'au moins un remorqueur (2, 2.1, 2.2) et/ou sont lus comme valeurs par défaut dans un système de positionnement dynamique d'au moins un remorqueur (2, 2.1, 2.2).

7. Procédé selon l'une quelconque des revendications 1 à 6, **caractérisé en ce que** les données variables comportent en outre des limitations des eaux environnantes d'une carte maritime électronique ainsi que du trafic maritime environnant et sont pris en considération par l'algorithme lors de la génération des ordres de commande.

8. Procédé selon l'une quelconque des revendications 1 à 7, **caractérisé en ce que** le modèle de données comporte en outre des données des conditions de fonctionnement autorisées d'au moins un remorqueur (2, 2.1, 2.2).
